# EUROPÄISCHE PATENTSCHRIFT

(11) **EP 1 902 446 B1**
(45) Veröffentlichungstag und Bekanntmachung des Hinweises auf die Patenterteilung: **13.01.2010**
(21) Anmeldenummer: 06754548.3
(22) Anmeldetag: 24.06.2006
(51) Int. Cl.: G21C 9/016

(54) **WANNENARTIGE KERNSCHMELZE-RÜCKHALTEEINRICHTUNG**
TUB-TYPE MELTDOWN RETAINING DEVICE
DISPOSITIF DE REFROIDISSEMENT EN CUVETTE POUR UN COEUR EN FUSION

(30) Priorität: 11.07.2005 DE 102005032253
(43) Veröffentlichungstag der Anmeldung: 26.03.2008
(73) Patentinhaber: Refractory Intellectual Property GmbH & Co. KG, 1100 Wien (AT)
(72) Erfinder: WILHELMI, Bruno, 55288 Spiesheim (DE)
(74) Vertreter: Becker, Thomas
(86) Internationale Anmeldenummer: PCT/EP2006/006107
(87) Internationale Veröffentlichungsnummer: WO 2007/006406

(56) Entgegenhaltungen:
- WO-A-2005/076285
- GB-A- 2 236 210
- US-A- 4 073 682
- US-B1- 6 192 097

## Beschreibung

Die Erfindung betrifft eine Anordnung für eine atomare Kernkraftanlage mit einer wannenartigen Rückhalteeinrichtung für eine Kernschmelze, wie sie bei einem größen anzunehmenden Unfall (GAU) in einer atomaren Kernkraftanlage entstehen könnte. Ein solcher GAU wird zwar von den Herstellern und Betreibern von Kernkraftanlagen als extrem unwahrscheinlich dargestellt; gleichwohl müssen selbstverständlich entsprechende Vorkehrungen für diesen Fall getroffen werden.

Der Unfall im Atommeiler von Tschernobyl hat gezeigt, dass ein wesentliches Problem darin besteht, die extreme Hitze der Kernschmelze aufzufangen, zu kompensieren oder abzuleiten, ohne die gesamte Anlage zu zerstören und damit radioaktive Strahlung freizusetzen.

Die GB 2236210 A offenbart eine Rückhalteeinrichtung, die unterhalb eines Reaktor-Druckgefäßes angeordnet wird und die Kernschmelze aufnehmen soll. Sie umfasst mehrere Metallschichten, davon eine als Opferschicht. In der US 6,192,097 wird vorgeschlagen, eine Kernschmelze in einem Kanal aufzufangen und entlang des Kanals in eine Verteilerkammer mit feuerfester Auskleidung zu führen, die seitlich versetzt zum Druckgefäß angeordnet ist.

In den letzten Jahren sind neue Reaktortypen entwickelt worden. Dazu gehört der so genannte Kugelhaufenreaktor. Brennstäbe werden durch tennisballartige Graphitkugeln ersetzt, in die Urankörnchen eingelagert sind. Diese Graphitkugeln sollen sich auf maximal 1.600° C erhitzen.

Zu den neuen Reaktortypen gehört auch der so genannte EPR (EPR = European Pressure Reactor). Einzelheiten dazu finden sich unter www.framatome-anp.com.

Der der Erfindung zugrunde liegende Gedanke besteht darin, im unwahrscheinlichen Fall einer Kernschmelze eine Rückhalteeinrichtung bereitzustellen, die mehrere Funktionen gleichzeitig erfüllt:
- Die Rückhalteeinrichtung nimmt die Kernschmelze auf und verhindert deren unkontrolliert Verteilung
- Die Rückhalteeinrichtung entzieht ohne extreme Kühlung der Kernschmelze Wärme
- Die Rückhalteeinrichtung stellt einen definierten Raum zur Verfügung, von dem die Schmelze anschließend in nachgeordnete Anlagenteile überführt werden kann.

Um diese Aüfgabenteile erfüllen zu können umfasst eine erfindungsgemäße Anordnung mehrere Anlagenteile gemäß Anspruch 1. Dazu gehört die Rückhalteeinrichtung mit einem äußeren Mantel, der innenseitig eine mehrschichtige Auskleidung aufweist, wobei die Auskleidung, von innen nach außen, eine monolithische Opferschicht, eine Schicht aus Formteilen und eine monolithische Füllschicht zwischen Mantel und Formschicht umfasst. Mit anderen Werten: Die Auskleidung umfasst mindestens drei unterschiedliche Schichten, denen auch unterschiedliche Aufgaben zufallen. Mindestens zwei Schichten bestehen aus einem feuerfesten, insbesondere keramischen Werkstoff. Die Rückhalteeinrichtung wird unmittelbar unterhalb des zugehörigen Reaktor-Druckgefäßes, welches die Brennelemente enthält, angeordnet. Dabei kann das Druckgefäß in das Rückhaltebecken hineinragen.

Die innenseitige Opferschicht kommt im Fall des Austritts der Kernschmelze aus dem Reaktor-Druckbehälter als erstes in Kontakt mit der gebildeten Schmelze. Die Temperatur einer Kernschmelze beträgt > 2000° C.

Obwohl die Opferschicht aus einem Werkstoff bestehen kann, der Temperaturen über 1.000° C oder über 1.500° C widersteht ist klar, dass die Opferschicht, wie der Name bereits sagt, durch die extrem heiße Kernschmelze erodiert beziehungsweise zerstört wird. Dies wird nicht nur in Kauf genommen, sondern ausdrücklich gewünscht. Deshalb muss die Opferschicht nicht unbedingt feuerfest (= hochtemperaturbeständig) sein. Es kommt zu einer ersten drastischen Senkung der Temperatur der Schmelze, die jetzt eine Mischung aus der Kernschmelze (Material der Brennelemente sowie deren Umhüllung) und der Opferschicht darstellt. Gleichzeitig wird die Dichte der Gesamtmischung gegenüber der Dichte der Kernschmelze herabgesetzt.

Im Sinne der Erfindung liegt es, die Opferschicht aus einem Werkstoff auszubilden, der bei Kontakt mit einer Kernschmelze nicht nur Speicherwärme aufnimmt, sondern auch zu endothermen Reaktionen führt, also Reaktionen, bei denen zusätzlich Wärme verbraucht wird. Auf diese Weise wird die Temperatur der in der Rückhalteeinrichtung befindlichen Schmelze zusätzlich herabgesetzt.

Nach einer Ausführungsform besteht die Opferschicht aus einem normalen Bau-Beton oder aus einem Beton mit einem hohen Tonerde (Al₂O₃)-Anteil, also einem so genannten feuerfesten Beton.

Diese Opferschicht liegt vor der so genannten Formteil-Schicht, die beispielsweise aus keramisch gebundenen Formteilen besteht. Solche Formteile, zum Beispiel Steine oder Platten, lassen sich zu stabilen Wänden und Böden zusammenstellen. Sie dienen dazu, eine thermisch und mechanisch stabile Schicht auszubilden. Werkstoffe auf Basis Zirkonoxid sind besonders vorteilhaft. Sie widerstehen hohen Temperaturen und weisen eine hohe mechanische Festigkeit auf. Werkstoffe mit einem Anteil ≥ 90 Masse-% ZrO₂ können zur Herstellung der genannten Formteile verwender werden. Die RHI AG, Wien bietet solche zirkonoxidhältigen Steine unter der Marke ZETTRAL 95 GR an. Wesentliche Rohstoffkomponente ist teilstabilisiertes ZrO₂. Die Steine sind keramisch gebunden. Sie enthalten neben circa 93 Masse-% ZrO₂ rund 4 Masse-% MgO und circa 1,5 Masse-% SiO₂ (neben üblichen Verunreinigungen). Ihre Rohdichte beträgt 4,4 g/cm³ (bestimmt gemäß EN-993-1). Die Druckfestigkeit (gemäß EN 993-5) beträgt bei Raumtemperatur ca. 1.10 N/mm². Die offene Porosität (gemessen nach EN 993-1) liegt bei circa 18 Vol.-%. Die wärmetechnischen Daten sind wie folgt: Die lineare Wärmedehnung (bei 1.600° C) liegt bei 0,8 %. Der Wert T_{0,5} für das Druckerweichen gemäß EN 993-8 beträgt etwa 1.650° C.

Solche Steine wurden bisher nur in Spezialglaswannen eingesetzt. Sie finden im Rahmen der Erfindung eine neuartige Anwendung.

Benachbare Formteile können über formschlüssige Elemente aneinander abschließen, beispielsweise bekannte Nut-/Federverbindungen.

Um die Stabilität der Formteilschicht insgesamt zu erhöhen kann es zweckmäßig sein, zumindest einzelne Formteile über Verbindungselemente oder Anker an dem äußeren Mantel der Rückhalteeinrichtung zu befestigen. Beispiele hierfür offenbaren die EP 1 124 094 A1 und DE 44 20 294 C2, auf deren Offenbarung insoweit Bezug genommen wird.

Dies gilt insbesondere dann, wenn der äußere Mantel ein Metallmantel ist. Hierauf wird später zurückzukommen sein.

Erfindungsgemäß ist mindestens eine weitere Schicht zwischen der Formteil-Schicht und dem äußeren Mantel der Rückhalteeinrichtung vorgesehen. Diese so genannte Füllschicht wird mit Hilfe einer monolithischen Masse erstellt, die aus einem Werkstoff hoher Wärmeleitfähigkeit bestehen kann. Auf diese Weise wird die Wärmeabfuhr aus der davor liegenden Formteil-Schicht begünstigt beziehungsweise beschleunigt. Die Wärmeleitfähigkeit sollte beispielsweise ≥ 5 W/m·K betragen. Bei einer größeren Masse an Opferbeton ist die Wärmeleitfähigkeit der Füllschicht weniger wichtig und sie kann auch < 5 W/m K betragen.

Geeignete Werkstoffe für die Füllschicht sind feuerfeste keramische Massen mit einem Gehalt an Kohlenstoff. Der Kohlenstoff kann als solcher, beispielsweise in Form von Graphit, vorliegen. Ebenso geeignet sind aber auch Füllschichten auf Basis einer SiC-hältigen Masse.

Für andere Anwendungen können auch hochtemperaturbeständige Füllschichten auf Basis ZrO₂, Al₂O₃, MgO oder Mischungen daraus von Vorteil sein. Solche Massen können beispielsweise aus ZrO₂-Pulve und einem Binder hergestellt werden. Sie lassen sich durch Vibrationsvorrichtungen weitestgehend lunkerfrei verarbeiten, können aber auch als Stampfmassen konfektioniert werden. Soweit flüssige Bindemittel Verwendung finden sollte ein etwaiger Wasseranteil im Rahmen einer thermischen Vorbehandlung der Füllschicht ausgetrieben werden.

Wir bereits oben ausgeführt kann der äußere Mantel der Rückhalteeinrichtung ein Metallmantel sein. Dieser Mantel kann zumindest teilweise in einer (weiteren) Betonwanne einliegen, die die gesamte Rückhalteeinrichtung umgreift und abstützt.

Der Mantel kann aber auch zumindest teilweise aus einem (gegebenenfalls auch hochtemperaturbeständigen) keramischen Werkstoff bestehen, beispielsweise einem Werkstoff der vorgenannten Art. Hierzu gehört auch Beton. Etwaige Verbindungselemente zwischen der Formteil-Schicht und dem Mantel werden entsprechend dann in oder an dem keramischen Material des Mantels befestigt.

Im Rahmen laufender Projektierungsarbeiten wurden folgende Dicken für die einzelnen Schichten als geeignet ermittelt:
- Opferschicht: 20-80 cm, insbesondere 35-65 cm, beispielsweise 45-55 cm.
- Formteil-Schicht: 10-40 cm, insbesondere 15-30 cm, beilspielsweise 16-25 cm.
- Füllschicht: 1-10 cm, insbesondere 2-8 cm, beispielsweise 4-6 cm.
- Betonwanne: Bis zu mehreren Metern:

Die topf- oder wannenartige Rückhalteeinrichtung, in die das Reaktor-Druckgefäß mit den Brennelementen hineinragt, ist mit einem Auslaufbereich zu versehen, der bei Bedarf geöffnet werden kann, um die Kernschmelze beziehungsweise das Kernschmelze/ Opferschicht-Gemisch in nachgeordnete Einrichtungen überführen zu können. Nach einer Ausführungsform besitzt die wannenartige Rückhalteeinrichtung dazu im Boden einen Stopfen (oder ein Regelventil), der geöffnet werden kann oder aufschmilzt und die Schmelze in einen Kanal führt, über den die Schmelze in eine Auffangwanne gelangt. Dabei ist der der Rückhalteein-richtung nachgeordnete Kanal ebenfalls mit einer hochtemperaturbeständigen Auskleidung ausgebildet, wie anhand der Rückhalteeinrichtung beschrieben. Die Auffangwanne benötigt aufgrund der Kühlung der Schmelze in der Rückhalteeinrichtung und gegebenenfalls im Kanal keine feuerfeste Auskleidung.

Die Erfindung wird nachstehend beispielhaft näher erläutert:
Dabei wird von einer Anlage ausgegangen, bei der das Reaktorgefäß in die erfindungsgemäße Rückhalteeinrichtung hineinragt und es wird der extrem unwahrscheinliche Fall einer Kernschmelze unterstellt.

Die Kernschmelze wird zunächst von der wannenartigen Rückhalteeinrichtung aufgefangen. Die radioaktive Schmelze gelangt in Kontakt mit dem Werkstoff der Opferschicht. Nach Berechnungen "verbraucht" die Kernschmelze innerhalb von 100 min nach dem Auftreffen 70-90 % der Opferschicht, die aufgeschmolzen wird und die so entstehende Mischschmelze zeitlich parallel abkühlt. Entsprechend verändert sich die Zusammensetzung und Temperatur der dabei entstehenden Mischschmelze.

Nach Projektberechnungen fällt der Gehalt an UO₂ und ZrO₂ der Mischschmelze stetig, während beispielsweise der SiO₂ und CaO-Gehalt der Mischschmelze steigt (während ZrO₂ und UO₂ Bestandteile der Kernschmelze sind handelt es sich bei SiO₂ und CaO überwiegend um Bestandteile der Opferschicht).

Im Weiteren wird pro Stunde durch den Einsatz der erfindungsgemäßen Wanne mit einer Absenkung der Temperatur der Mischschmelze von rund 100° C gerechnet.

Soweit im Rahmen dieser Beschreibung von hochtemperaturbeständigen Werkstoffen die Rede ist werden hierunter Werkstoffe verstanden, die in jedem Fall > 1.000° C temperaturbeständig sind, vorzugsweise 1.500°C, soweit nicht anders angegeben. Eine obere Grenze existiert nicht. Die beschriebenen Formteile auf Basis ZrO₂ können eine Temperaturbeständigkeit über 1.900° C aufweisen. Sie sind mindestens 3 Stunden gegenüber einer Schmelze mit 1.900° C beständig.

## Patentansprüche

1. Anordnung für eine atomare Kernkraftanlage, mit
1.1 einer zur Anordnung unmittelbar unterhalb eines Reaktor-Druckgefäßcs ausgebildeten wannenartigen Kernschmelze-Rückhalteeinrichtung, mit
1.1.1 einem äußeren Mantel, der innenseitig eine mehrschichtige Auskleidung aufweiset, wobei die Auskleidung von innen nach außen, eine monolithische Opferschicht, eine Schicht aus > 1000 °C temperaturbeständigen Formteilen und eine monolithische Füllschicht zwischen Mantel und Formteil-Schicht umfasst, sowie mit
1.1.2 einem bei Bedarf zu öffnenden Auslaufbereich und
1.2 einem sich daran anschließenden Kanal, der eine > 1000 °C temperaturbeständige Auskleidung aufweist und
1.3 einer Auffangwanne ohne feuerfeste Auskleidung, in die der Kanal einmündet.

2. Anordnung nach Anspruch 1, wobei die Opferschicht aus einem Werkstoff besteht, der bei Kontakt mit einer Kernschmelze zu endothermen Reaktionen führt.

3. Anordnung nach Anspruch 1, wobei die Opferschicht aus Beton besteht.

4. Anordnung nach Anspruch 1, wobei die Formteil-Schicht aus keramisch gebundenen Formteile besteht.

5. Anordnung nach Anspruch 1, wobei die Formteil-Schicht aus Formteilen auf Basis ZrO₂ besteht.

6. Anordnung nach Anspruch 1, wobei die Formteil-Schicht aus Formteilen besteht, die ≥ 90 M-% ZrO₂ enthalten.

7. Anordnung nach Anspruch 1, wobei die Formteil-Schicht aus formschlüssig aneinander anschließenden Formteilen besteht.

8. Anordnung nach Anspruch 1, wobei die Füllschicht eine Wärmeleitfähigkeit ≥ 5 W/m·K aufweist.

9. Anordnung nach Anspruch 1, wobei die Füllschicht Kohlenstoff enthält.

10. Anordnung nach Anspruch 1, wobei die Füllschicht aus einer SiC-hältigen Masse besteht.

11. Anordnung nach Anspruch 1, wobei die Füllschicht aus einer ZrO₂-hältigen Masse besteht.

12. Anordnung nach Anspruch 1, wobei der Mantel ein Metallmantel ist.

13. Anordnung nach Anspruch 1, wobei der Mantel zumindest teilweise in einer Betonwanne einliegt.

14. Anordnung nach Anspruch 1, wobei der Mantel zumindest teilweise aus einem>1000°C beständigen keramischen Werkstoff besteht.

15. Anordnung nach Anspruch 1, wobei der Mantel zumindest, teilweise aus Beton besteht.

16. Anordnung nach Anspruch 1, wobei der Mantel zumindest teilweise von einer Betonwanne gebildet wird.

## Claims

1. Arrangement of a nuclear power plant, comprising
1.1 a tank-type core meltdown retention device, designed for placement directly below a reactor pressure vessel, with
1.1.1 an outer envelope that has on the inside a multilayer lining, wherein the lining, from the inside to the outside, includes a monolithic sacrificial layer, a layer of > 1.000°C temperature-resistant moulded parts, and a monolithic filling layer between the envelope and moulded parts layer, and
1.1.2 an outlet area to be opened by demand, and
1.2 a subsequent channel, comprising a lining heat resistant to more than 1.000°C, and
1.3 a containment tank without refractory lining, into which the channel enters.

2. Arrangement according to claim 1, in which the sacrificial layer consists of a material that on contact with a meltdown leads to endothermic reactions.

3. Arrangement according to claim 1, in which the sacrificial layer consists of concrete.

4. Arrangement according to claim 1, in which the moulded parts layer consists of ceramically bound moulded parts.

5. Arrangement according to claim 1, in which the moulded parts layer consists of moulded parts based on ZrO₂.

6. Arrangement according to claim 1, in which the moulded parts layer consists of moulded parts containing ≥ 90 wt.% ZrO₂.

7. Arrangement according to claim 1, in which the moulded parts layer consists of moulded parts joined to one another in an interlocking manner.

8. Arrangement according to claim 1, in which the filling layer has a thermal conductivity ≥ 5 W/m·K.

9. Arrangement according to claim 1, in which the filling layer contains carbon.

10. Arrangement according to claim 1, in which the filling layer consists of a SiC-containing composition.

11. Arrangement according to claim 1, in which the filling layer consists of a ZrO₂-containing composition.

12. Arrangement according to claim 1, in which the envelope is a metal envelope.

13. Arrangement according to claim 1, in which the envelope lies at least partly in a concrete tank.

14. Arrangement according to claim 1, in which the envelope consists at least in part of a > 1.000°C temperature-resistant ceramic material.

15. Arrangement according to claim 1, in which the envelope consists at least in part of concrete.

16. Arrangement according to claim 1, in which the envelope is formed at least in part by a concrete tank.

## Revendications

1. Dispositif destiné à une installation d'énergie nucléaire, avec
1.1 un dispositif en forme de cuve destiné à retenir un coeur de réacteur nucléaire en fusion, disposé immédiatement en-dessous d'une enceinte de confinement de réacteur, avec
1.1.1 une coque extérieure, pourvue sur sa face intérieure d'un revêtement multicouche, ledit revêtement comprenant, de l'intérieur vers l'extérieur, une couche monolithique destinée à être sacrifiée, une couche en pièces moulées résistant à des températures supérieures à 1000 °C et une couche de remplissage entre la coque et la couche en pièces moulées, ainsi qu'avec
1.1.2 une zone d'écoulement pouvant être ouverte en cas de besoin, et
1.2 un canal qui en constitue la suite et qui présente un revêtement résistant à des températures supérieures à 1000 °C, et
1.3 un réservoir de réception dépourvu de revêtement réfractaire dans lequel ledit canal se jette.

2. Dispositif selon la revendication 1, ladite couche destinée à être sacrifiée étant constituée d'un matériau qui, en contact avec un coeur de réacteur nucléaire en fusion, provoque des réactions endothermiques.

3. Dispositif selon la revendication 1, la couche destinée à être sacrifiée étant constituée de béton.

4. Dispositif selon la revendication 1, la couche en pièces moulées étant constituée de pièces moulées ayant subi un durcissement de type céramique.

5. Dispositif selon la revendication 1, la couche en pièces moulées étant constituée de pièces moulées à base de ZrO₂.

6. Dispositif selon la revendication 1, la couche en pièces moulées étant constituée de pièces moulées contenant plus de 90 % en poids de ZrO₂.

7. Dispositif selon la revendication 1, la couche en pièces moulées étant constituée d'une suite de pièces moulées dont la forme de l'une épouse celle de l'autre.

8. Dispositif selon la revendication 1, ladite couche de remplissage présentant une conductivité thermique supérieure ou égale à 5 W/m•K.

9. Dispositif selon la revendication 1, ladite couche de remplissage contenant du carbone.

10. Dispositif selon la revendication 1, ladite couche de remplissage étant constituée d'une masse contenant du SIC.

11. Dispositif selon la revendication 1, ladite couche de remplissage étant constituée d'une masse contenant du ZrO₂.

12. Dispositif selon la revendication 1, ladite coque étant une coque métallique.

13. Dispositif selon la revendication 1, ladite coque étant au moins partiellement disposée au sein d'une cuve en béton.

14. Dispositif selon la revendication 1, ladite coque étant au moins partiellement constituée d'un matériau céramique résistant à plus de 1000 °C.

15. Dispositif selon la revendication 1, ladite coque étant au moins partiellement constituée de béton.

16. Dispositif selon la revendication 1, ladite coque étant au moins partiellement formée par une cuve en béton.
